# EUROPÄISCHE PATENTANMELDUNG

(11) **EP 0 692 213 A1**
(43) Veröffentlichungstag der Anmeldung: **17.01.1996**
(21) Anmeldenummer: 95111096.4
(22) Anmeldetag: 14.07.1995
(51) Int. Cl.: A47J 37/07, A47J 37/06

(54) **Grillgerät**

(30) Priorität: 15.07.1994 DE 9411524 U
(71) Anmelder: Kelahmetoglu, Recep, D-10777 Berlin (DE); Hörber, Gerhard, Dr., D-13467 Berlin (DE)
(72) Erfinder: Kelahmetoglu, Recep, D-10777 Berlin (DE); Hörber, Gerhard, Dr., D-13467 Berlin (DE)
(74) Vertreter: Alber, Norbert

(57) **Zusammenfassung**

Es wird ein Grillgerät vorgestellt, bei dem sich am Grillgut keine karzinogenen Stoffe aus herabtropfendem und verbranntem Fett ansammeln können, und die Handhabung, insbesondere der Anheizvorgang des Brennstoffes sehr einfach vor sich geht. Zusätzlich ist die Grilltemperatur möglichst genau und einfach einstellbar. Die Fettwanne (13,13') ist mit einem Stoff gefüllt, welcher das Fett aufnimmt und eine zu starke Erhitzung des Fettes verhindert.

## Beschreibung

Die Erfindung betrifft ein Grillgerät, wie es z. B. zum Grillen im Freien mittels Holzkohle, Steinkohle, Gas oder elektrischem Strom verwendet wird.

Üblicherweise bestehen derartige Grillgeräte aus einer Brennstoffwanne, die mittels entsprechend langer Stützbeine auf Arbeitshöhe gebracht ist. In die Brennstoffwanne wird die Holzkohle gelegt und zunächst - meist ohne darübergelegten Grillrost und Grillgut - bei offener Flamme solange verbrannt, bis ausreichend Glut in der Holzkohle vorhanden ist.

Da in der Regel die Wanne keine unterseitige, regulierbare Frischluftzufuhr aufweist, ist dieses Anheizen meist sehr mühselig, da mit diversen Hilfsmitteln wie Fächern, Haarfön etc. aktiv Verbrennungsluft zugeführt und zusätzlich die Verbrennung mittels chemischer Hilfsstoffe in Gang gebracht werden muß.

Nach Erzielung ausreichender Glut wird die offene Flamme gelöscht, und das Grillgut auf den Grillrost über die Glut gelegt.

Dabei ist nachteilig, daß das sich aus dem Grillgut lösende Fett in die Glut tropft, dort verbrennt, und die dabei entstehenden karzinogenen Stoffe, die in den aufsteigenden Verbrennungsgasen enthalten sind, sich auf dem Grillgut ablagern, was erwiesenermaßen sehr schädlich ist. Ein weiterer Nachteil derartiger Grillgeräte besteht darin, daß die Hitze am Grillgut nur durch die Höhe, also den Abstand des Grillgutes von der Glut, variiert werden kann. Zu diesem Zweck muß während des Grillvorganges meist der gesamte Grillrost in der vorhandenen Rasteinrichtung versetzt werden, was erstens aufgrund der groben Stufung nicht zufriedenstellend fein funktioniert, und zweitens aufgrund der hohen Temperatur des Grillrostes bei unsachgemäßer Handhabung nicht selten zu Verbrennungen des Bedieners führt.

Es ist daher Aufgabe der Erfindung, ein Grillgerät zu schaffen, bei dem sich am Grillgut keine karzinogenen Stoffe aus herabtropfendem und verbranntem Fett ansammeln können, und die Handhabung, insbesondere der Anheizvorgang des Brennstoffes sehr einfach vor sich geht. Zusätzlich sollte die Grilltemperatur möglichst genau, vorzugsweise stufenlos, und einfach einstellbar sein.

Diese Aufgabe wird durch die kennzeichnenden Merkmale des Anspruches 1 gelöst. Vorteilhafte Ausführungsformen ergeben sich aus den Unteransprüchen.

Das Verbrennen von herabtropfendem Fett und dadurch das Ablagern der Nitrosamine auf dem Grillgut wird bei einer ersten Bauform vermieden, indem der Brennstoff, in der Regel glühende Holzkohle oder einer der oben genannten Energieträger, nicht unterhalb des Grillbereiches, z.B. des waagerecht liegenden Grillrostes, sondern hierzu seitlich versetzt angeordnet ist.

Um die heißen Verbrennungsgase dennoch dem Grillgut zuzuleiten, wird eine Haube auf das die Holzkohle enthaltende Basisteil dicht anliegend und umfassend aufgesetzt, welches nur in demjenigen Bereich einen freien oberen Auslaßbereich besitzt, der sich nicht mit der Grundfläche der tiefer liegenden Brennstoffwannen überdeckt.

Beispielsweise kann sich die Haube, die an der unteren und oberen Stirnseite jeweils offen ist, sich von unten nach oben wenigstens im mittleren Bereich konisch verjüngen, so daß im oberen, engen Kaminteil der Grillrost mit dem Grillgut abgelegt wird, während sich die Holzkohle in der Brennstoffwanne tiefer liegend, und seitlich neben dem Auslaßbereich der Haube befindet, also unterhalb der Schrägen des Konusteiles.

Dabei kann das Grillgerät im Querschnitt symnetrisch ausgebildet sein, also mit einem mittigen Grillbereich und auf beiden Seiten versetzt hierzu angeordneten Brennstoffwannen, und damit beidseits konisch verlaufenden Längswänden der Haube.

Gerade bei Grillgeräten mit größeren Abmessungen, wie etwa im gewerblichen Bereich, hat dabei jedoch der Bediener zwischen sich und dem Grillbereich den durch die ihm zugeordnete Brennstoffwanne und die dadurch bedingte Schrägfläche der Haube einen großen Abstand zu überwinden. Für diese Fälle ist es empfehlenswert, nur auf der vom Bediener abgewandten Rückseite eine Brennstoffwanne hinter dem Grillbereich anzuordnen, so daß auf der dem Bediener zugewandten Seite die Wand der Haube senkrecht verläuft und der Bediener direkt vor sich den Grillbereich hat, was die Handhabung erleichtert.

Die Haube wird auf entsprechende Auflagen des Basisteiles, in dem sich der Brennstoff befindet, auf geeigneten Auflagen abgelegt, wobei als Auflagen z. B. gleichzeitig die Tragegriffe des Basisteiles dienen können.

Anstatt oder zusätzlich zu einer Brennstoffwanne für Festbrennstoffe kann das Grillgerät an der gleichen Stelle, auswechselbar oder fest installiert, Heizstäbe für das Grillen mittels Strom durch Widerstandsheizung aufweisen, oder auch einen Bereich zum Verbrennen von Gas.

Die Gasdüsen und/oder el. Heizstäbe, die vorzugsweise liegend angeordnet sein sollten, können entweder im Unterteil oder in der Haube, vorzugsweise stirnseitig, eingebracht und z.B. aus einer Gasflasche gespeist werden.

Noch einfacher ist der Betrieb des Grillgerätes mit wechselnden Brennstoffen möglich, wenn die Gasaustrittsdrüsen und/oder el. Heizstäbe, für Betrieb mit Gas- und/oder el. Strom im Inneren eines oder zweier getrennter separater Zwischenteile angeordnet sind, die zwischen Basisteil und Haube gesetzt werden können. An der Außenseite des bzw. der Zwischenteile sind dann die entsprechenden Anschlüsse für el. Strom oder Gas, welches in der Regel von einer Gasflasche aus zugeführt wird, vorhanden.

Soll dann mit Gas oder el. Strom gegrillt werden, wird das entsprechende Zwischenteil zwischen Basisteil und Haube gesetzt, die entsprechende Energiequelle angeschlossen, und vorher selbstverständlich die Brennstoffwannen für den Festbrennstoff entfernt.

Um das aus dem Grillgut herabtropfende Fett aufzufangen, ist der Bereich unterhalb des Grillrostes bzw. unterhalb der, auf das obere Ende der Haube aufgelegten, Spiesse mit dem Grillgut mit einer mindestens ebenso großen Fettwanne ausgestattet, die vorzugsweise mit Wasser gefüllt wird, in welche das Fett hineintropft. Alternativ kann selbstverständlich Sand oder jede andere geeignete Substanz oder Flüssigkeit in der Fettwanne zum Auffangen des Fettes verwendet werden, die ein zu starkes Aufheizen des Fettes und die Bildung von Nitrosaminen verhindert.

Neben der Vermeidung der Bildung von schädlichen Nitrosaminen wird dadurch auch die Verschmutzung des Grillgerätes stark verringert, und damit der nachfolgende Reinigungsaufwand.

Das Basisteil ist vorzugsweise nicht einstückig ausgebildet, sondern mehrteilig, und besteht etwa aus einem ebenfalls wieder kaminartig an der oberen und unteren Stirnseite im wesentlichen offenen, wiederum vorzugsweise aus Blech gefertigten Unterteil, welches mittels entsprechend langer Stützbeine in der gewünschten Höhe aufgeständert ist. In den freien Querschnitt im oberen Bereich des Unterteiles werden auf geeigneten Auflagen die Brennstoffwanne bzw. Brennstoffwannen sowie ggf. die Fettwanne eingesetzt.

Um zusätzlich vor allem den Anheizvorgang zu erleichtern und zu beschleunigen, sind die Böden der Brennstoffwannen als Brennstoffroste und damit luftdurchlässig ausgebildet. Als vorteilhaft hat sich dabei die Verwendung eines Lochbleches erwiesen, dessen Lochung in Abstimmung mit der Körnung des Brennstoffes erfolgen muß, bei üblicher Grillkohle also etwa ein Lochdurchmesser von 5 bis 10 mm. Dadurch werden die Strahlungsverluste nach unten gering gehalten trotz ausreichend guter Belüftung von unten.

Aufgrund der Kaminwirkung des im Prinzip unten offenen Unterteiles wird relativ viel Verbrennungsluft durch den Brennstoffrost dem Brennstoff zugeführt, so daß der Anheizvorgang sehr schnell vor sich geht.

Die untere, freie Stirnfläche des Unterteiles wird jedoch vorzugsweise nicht vollständig offen gelassen, sondern mittels einer Aschenwanne, die beispielsweise nach Art einer Schublade von der Seite her aufgeschoben werden kann, im wesentlichen dicht verschlossen. Um dennoch die gewünschte Luftzufuhr von unten her durch das Unterteil und damit dem Brennstoff zuzuführen, kann etwa die Aschenwanne im gewünschten Maß geöffnet werden, um den beabsichtigten Luftzug quantitativ einzustellen.

Eine andere Möglichkeit besteht darin, im unteren Bereich des Unterteiles Luftklappen oder ähnliches vorzusehen, die im gewünschten Maß geöffnet und in dieser Stellung fixiert werden können. Um die Aschenwanne nicht ebenso groß wie das gesamte Unterteil von seiner Grundfläche ausbilden zu müssen, ist das Unterteil - im wesentlichen genau anders herum wie die Haube 1 - wenigstens im mittleren Bereich konisch, jedoch nach unten zu sich verjüngend ausgebildet, so daß die von den Brennstoffrosten herabfallende Asche entlang der Schrägen des Schrägbereiches des Unterteiles zur Mitte und damit in die Aschenwanne rutscht.

Um über die Querschnittsfläche des Grillrostes eine im wesentlichen gleichverteilte Heißgas-Strömung zu erzeugen, ist im Inneren der Haube am Übergang des Konusteiles zum darüberliegenden Kaminteil ein nach unten gerichteter Vorsprung vorgesehen, dessen Aufgabe darin besteht, die seitlich unter dem Konusteil aufsteigenden heißen Gase nicht unmittelbar an der Wand entlang aufsteigen zu lassen. Denn dies hätte zur Folge, daß über die Querschnittsfläche des Grillrostes die Grilltemperatur in den Randbereichen sehr viel höher als in der Mitte wäre.

Durch den nach unten weit genug ins Innere der Haube ragenden Vorsprung, der sich im wesentlichen über die gesamte Länge bzw den gesamten Umfang der Haube erstreckt, werden die aufsteigenden Heißgase so stark verwirbelt, daß aufgrund der Turbulenzen eine im wesentlichen gleichmäßige Verteilung über den gesamten mittleren Querschnittsbereich und damit über die gesamte Fläche des Grillrostes gegeben ist.

Auf die Haube kann vollständig verzichtet werden, wenn der Grillbereich im wesentlichen wieder oberhalb der Brennstoffwanne angeordnet wird.

Ein Herabtropfen des Fettes in die Brennstoffwanne wird bei einer zweiten Ausführungsform durch die Anordnung mehrerer Fettwannen in mindestens zwei Ebenen erreicht, wobei die Fettwannen einer Ebene jeweils mit Abstand zueinander angeordnet sind und diese Abstände durch die darüberliegenden Fettwannen der höheren Ebene gerade verdeckt sind.

Ausführungsformen gemäß der Erfindung sind im folgenden beispielhaft anhand der Figuren näher beschrieben. Es zeigen
- Fig. 1: die Einzelteile des Grillgerätes separat übereinander,
- Fig. 2: das zusammengesetzte Grillgerät in Schnittdarstellung,
- Fig. 3: einen Detail-Schnitt entlang der Linie III der Fig. 2,
- Fig. 4: eine der Fig. 1 ähnliche Darstellung und
- Fig. 5: eine stirnseitige Querschnitt-Darstellung einer anderen Bauform des Grillgerätes.

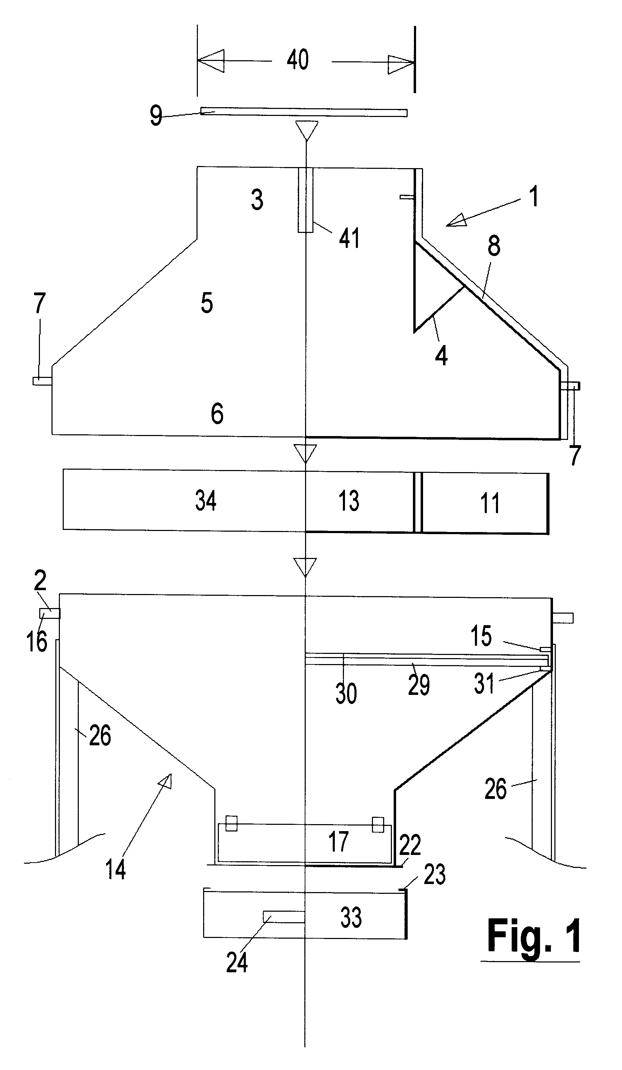

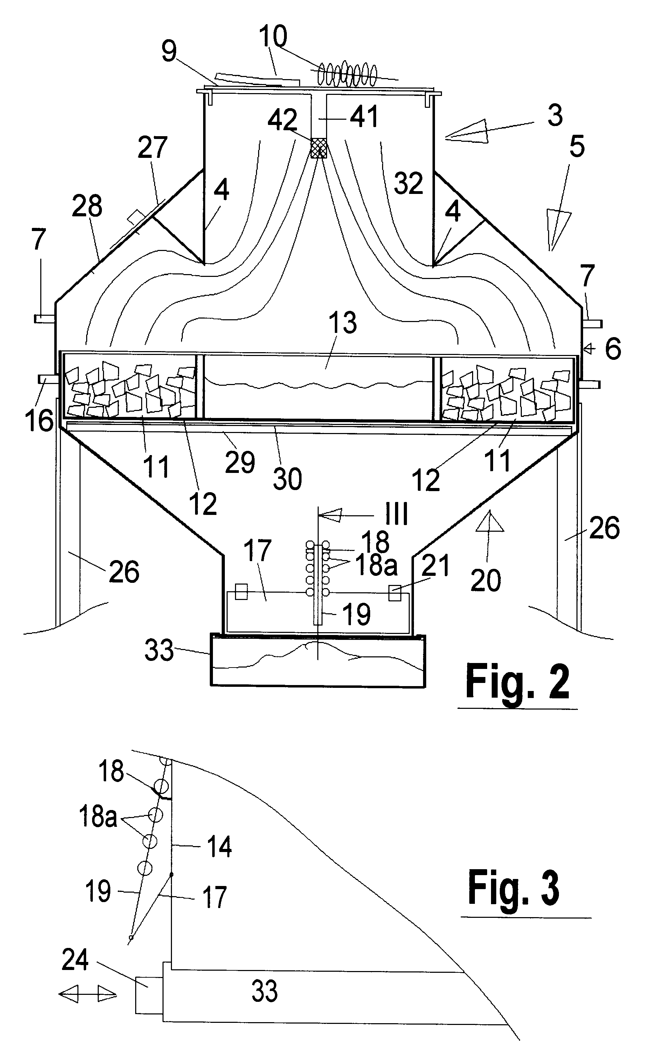

In der Einzelteil-Darstellung der Fig. 1 sind die Einzelteile in der linken Bildhälfte in stirnseitiger Ansicht, in der rechten Bildhälfte dagegen in der Schnittdarstellung abgebildet. Dem gegenüber zeigt Fig. 2 den im Betrieb befindlichen, zusammengesetzten Grill, und Fig. 3 eine Detail-Darstellung um 90° gedrehten Schnitt entlang der Linie III - III der Fig. 2.

Das Tragteil des Grillgerätes ist das Unterteil 14, welches mittels der Stützbeine 26, an denen sich am unteren Ende auch Rollen befinden können, in Arbeitshöhe abgestützt ist. Das Unterteil 14 kann mittels seitlich vorspringender Griffe 16, die gleichzeitig als Auflage 2 für die darübergestülpte Haube 1 dienen, transportiert werden.

Das Unterteil 14 ist vorzugsweise - ebenso wie die anderen Teile des Grillgerätes - aus Stahlblech oder ähnlichem Material gefertigt.

Das Unterteil 14 ist an der oberen und eventuell auch an der unteren Stirnseite offen und besitzt im oberen Bereich im wesentlichen senkrechte Wände, und ebenso im unteren Bereich, während im dazwischenliegenden Schrägbereich eine Verjüngung des inneren Querschnittes nach unten zu stattfindet.

Im letzteren Fall ist der untere, schmalere Bereich des Unterteiles 14 mit nach beiden Seiten abragenden Vorsprüngen 22 versehen, über welche eine entsprechende umgreifende Kröpfung 23 am oberen Rand der Aschenwanne 33 greifen kann, wodurch die Aschenwanne 33 mittels stirnseitiger Griffe 24 nach Art einer Schublade unmittelbar unterhalb des unteren, freien Auslasses des Unterteiles 14 geschoben werden kann und in diesem Zustand die Unterseite des Unterteiles 14 relativ dicht abschließt.

In den Bereich des Unterteiles mit den im wesentlichen lotrechten Wänden ist eine Wanne 34 einsetzbar, die auf entsprechende, von den Seitenwänden des Unterteiles nach innen ragende Wannenauflagen 15 aufsitzt. Die Wanne 34 ist unterteilt in eine mittlere Fettwanne 13 und beidseitige äußere Brennstoffwannen 11. Die Böden der Brennstoffwanne 11 sind dabei als luftdurchlässige Roste 12 ausgebildet.

Über den obersten Bereich des Unterteiles 14 kann die kaminartige Haube 1 eng anliegend gestülpt werden, wobei auch ein Anliegen der Haube 1 am Innenumfang des Unterteiles 14 denkbar wäre.

Die Haube 1 verjüngt sich nach oben zu mittels eines mittleren Konusteiles 5, und endet nach oben in einem schmalen Kaminteil 3 mit im wesentlichen senkrecht ansteigenden Wänden. Der Grillrost 9 sitzt (gemäß Fig. 2) auf dem oberen Ende des Kaminteiles 3 und ist dort mittels eines sich wenigstens teilweise nach außerhalb des Kaminteiles erstreckenden Rahmens aus L-Profil, dessen senkrechter Schenkel sich knapp innerhalb des Kaminteiles 3 nach unten erstreckt, und dadurch gegen seitliches Verrutschen sichert.

In einer anderen Lösung (gemäß Fig. 1), ist der Grillrost 9 in den Kaminteil 3 einsetzbar und auf entsprechenden in das Innere des Kaminteiles 3 ragenden Auflagen absetzbar.

Weiterhin sind wenigstens 2 nach oben offene Schlitze 41 in den einander gegenüberliegenden Seitenwänden vorhanden, um in die miteinander fluchtenden Schlitze 41 die im Handel erhältlichen, von einem batteriebetriebenen Elektromotor antreibbaren, großen Grillspieße 42 einlegen zu können, auf denen dann größeres Grillgut wie Hähnchen oder andere große Fleischteile während des Grillens drehend angetrieben werden.

Wenn die Haube 1 auf dem Unterteil 14 aufgesetzt ist, befindet sich der in der Mitte angeordnete Kaminteil 3 und damit der hierdurch gebildete freie Auslaßbereich 32 genau oberhalb der Grundfläche der Fettwanne 13, während die Schrägen des Konusteiles 5 sich oberhalb der Brennstoffwannen 11 befinden. Die heißen Gase, die aus dem Brennstoff, z.B. der glühenden Holzkohle, in den Brennstoffwannen 11 aufsteigen, strömt somit entlang der Unterseiten des Konusteiles 5 der Haube 1 nach oben zum Auslaßbereich 32.

Da am oberen Ende des Konusteiles 5 jedoch durchgehende Vorsprünge 4 ins Innere der Haube nach unten gerichtet weit vorstehen, werden die Gase hierdurch auf Ihrem Strömungsweg stark verwirbelt, so daß über den gesamten Querschnitt des Auslaßbereiches 32 und damit des Grillrostes 9 eine im wesentlichen gleiche Heißgasverteilung gegeben ist.

Um den Anheizvorgang des Brennstoffes in den Brennstoffwannen 11 zu erleichtern, kann in das Unterteil ein definierter Luftzustrom ermöglicht werden, selbst bei vollständig aufgeschobener Aschenwanne 33, indem wenigstens eine Luftklappe 17, die sich im unteren, mit geraden Wänden ausgestattenen, Bereich des Unterteiles 14 befinden, im gewünschten Maße in einer Offenstellung fixiert werden können.

Wie besser in der Detail-Darstellung der Fig. 3 zu erkennen, ist die gelenkig an der Seitenwand des Unterteiles 14 befestigte Luftklappe 17 mit einem Einstellhebel 19 gelenkig verbunden, welcher entlang seiner Längserstreckung beabstandete Vorsprünge 18a aufweist. Mittels einer Gegenraste 18, die an der Außenseite der Wandung des Unterteiles 14 vorstehend angeordnet ist, kann einer der gewünschten Vorsprünge 18a des Einstellhebels 19 dort eingehängt und dadurch die Luftklappe 17 in einem gezielten Maß geöffnet und fixiert werden.

Nach dem vollständigen Anbrennen des Brennstoffes wird bei Verwendung von Holzkohle oder Steinkohle in der Regel die Luftzufuhr von unten teilweise bis vollständig unterbrochen, um die Hitzezufuhr zum Grillgut zu regeln. Bei Verwendung von Gas oder Strom wird durch die Regelung der Gaszufuhr bzw. der el. Widerstandsheizung eine zusätzliche Regelmöglichkeit geschaffen.

Zu diesem Zweck kann außer dem Schließen der Luftklappe 17 eine Glühplatte 29, die im wesentlichen die Größe der Unterseite der Wanne 34 besitzt, durch einen entsprechenden Schlitz 30 in einer Wand des Unterteiles 14 knapp unterhalb der Wanne 34 und damit der Brennstoffwanne 11 einschiebbar sein, wodurch das Unterteil nach unten sehr gut luftabdichtend verschlossen wird, zu welchem Zweck die Glühplatte 29 auf entsprechenden Auflagen 31, die in das Innere des Unterteiles 14 hineinragen, aufliegt.

Hierdurch wird weiterhin eine zu starke Wärmeabstrahlung von den Brennstoffwannen 11 aus nach unten und damit ein nutzloses Aufheizen des Unterteiles vermieden.

Vorzugsweise kann weiterhin das Äußere der Haube 1 mit einer Isolierung 8 beschichtet sein, die sich entweder auf der Außenseite oder auch auf der Innenseite - je nach verwendetem Material für die Isolierung - befinden kann. Hierdurch wird bei ungeschicktem Handhaben eine Brandverletzung der bedienenden Personen an der sehr heißen Haube 1 vermieden.

Eine derartige Isolierung kann auch an dem jedoch in der Regel weniger heißen Unterteil 14 vorgesehen werden.

Um auch nach dem Anheizen des Brennstoffes, also während des eigentlichen Grillvorganges, die Temperatur der aufströmenden Gase am Grillgut 10 nicht nur durch die - in der Regel hierfür völlig ausreichenden Luftklappen 17 - regulieren zu können, sondern auch Festbrennstoff ohne Abnahme der Haube 1 nachfüllen zu können, sind im Konusbereich 5 der Haube Regulierungsöffnungen 28 vorgesehen, die mittels entsprechender abdeckender Regulierschieber 27 teilweise oder ganz geöffnet oder geschlossen werden können. Durch zunehmende Öffnung dieser Regulieröffnungen 28 strömt Kaltluft ins Innere der Haube und mischt sich mit den aufsteigenden, heißen Verbrennungsgasen, wodurch eine Reduzierung der Temperatur am Grillgut 10 stufenlos möglich ist, was ansonsten nur mittels manuellem Ändern des Abstandes des Grillgutes 10 von dem Brennstoff möglich ist.

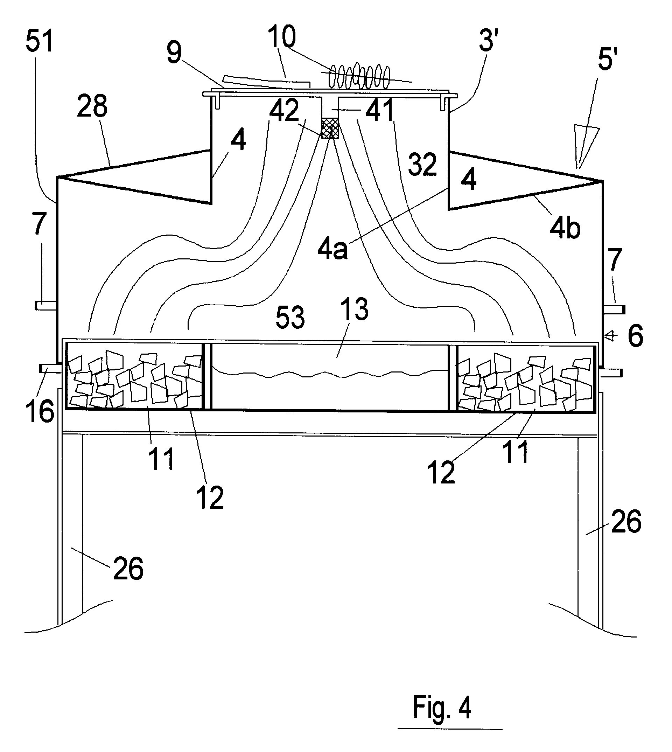

Um die Aufbewahrung des Grillgerätes mit möglichst geringem Raumbedarf durchführen zu können, ist es möglich, die Haube 1, wie in Fig. 4 dargestellt, zerlegbar auszubilden.

Dabei kann das stirnseitige Abschlußblech eine separate Blechplatte sein, welche mit den Längsteilen verbindbar ist. Die Längsteile ihrerseits können als gelenkig miteinander verbundene einzelne Blechteile ausgebildet sein.

Dabei bildet eine erste Blechplatte das Außenblech 51, welches die Längsseite der Haube im unteren Teil bildet. Der von der Oberkante der Außenplatte 51 als Vorsprung 4 schräg nach innen und unten verlaufende Teil 4b bildet eine zweite Blechplatte, welche mit der aus Platte 51 entlang der gemeinsamen Längskante gelenkig verbunden ist. An die andere Längskante der Vorsprungplatte 4b schließt sich wiederum gelenkig verbunden eine Platte 3' an, die sowohl die Längsseite des Kaminteiles der Haube, als auch den im wesentlichen senkrecht ansteigenden Teil 4a des Vorsprunges 4 einstückig bildet.

Diese drei Teile können mittels ihrer Gelenke in die für die Gestaltung der Haube notwendige Z-Form gebracht werden und verfügen über formschlüssige Elemente, insbesondere rastbare Elemente, um eine weitere Blechplatte, nämlich die Konusplatte 5', zwischen den äußeren Bereich der Vorsprungplatte 4b und den oberen Bereich der Platte 3' einsetzen zu können, wodurch dann die Z-Form der drei damit verbundenen anderen Blechplatten fixiert wird.

Die Konusplatte 5' wird dabei von den aufsteigenden heißen Rauchgasen durch die darunter liegende Vorsprungplatte 4b ganz oder teilweise abgeschirmt, je nach dem, wie weit außen die Konusplatte 5' an der Vorsprungplatte 4b ansetzt. Infolgedessen dient die Konusplatte 5' im Ganzen nur zum Warmhalten, oder teilweise zum Warmhalten und teilweise zum Garen von Speisen. Davon abhängig ist auch die Neigung der Konusplatte 5', die vorzugsweise so flach geneigt ist, daß sich Lebensmittel darauf ablegen lassen. Maximal kann die Konusplatte 5' auch waagerecht ausgebildet sein.

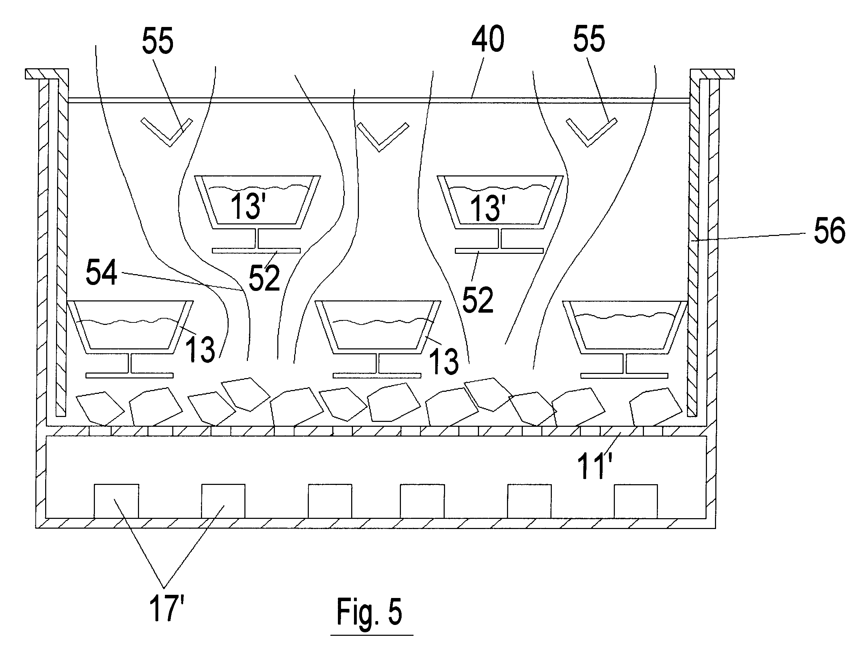

Fig. 5 zeigt eine andere Bauform des erfindungsgemäßen Grillgerätes. Dabei besteht der Hauptvorteil darin, daß die Fläche des Grillbereiches 40 sich in der Aufsicht betrachtet nicht außerhalb der Grundfläche der Brennstoffwanne 11, sondern unmittelbar darüber befindet, wodurch sich ein geringerer Grundflächenbedarf des Grillgerätes ergibt.

Das Hineintropfen des Fettes vom Grillgut in die Glut der Brennstoffwanne 11 wird dadurch verhindert, daß zwischen den übereinander angeordneten Grillbereichen 40 einerseits und der Brennstoffwanne 11 andererseits in zwei ebenen Fettwannen 13, 13' angeordnet sind.

Der Grillbereich wird dabei dennoch von den heißen Gasen aus der Brennstoffwanne 11 durchströmt, indem in der unteren Ebene von Fettwannen diese Fettwannen 13 in einem gegenseitigen, im wesentlichen parallelen Abstand 54 zueinander angeordnet sind, und genau diese Abstände 54 durch die darüber angeordneten Fettwannen 13' der höheren Ebene abgedeckt werden. Die Rauchgase schlängeln sich somit im Aufsteigen von der Brennstoffwanne 11 um die Fettwannen 13 herum und erreichen den darüberliegenden Grillbereich 40.

Um dort eine gleichmäßige Verteilung und damit gleichmäßigen Hitze der Rauchgase über die Fläche des Grillbereiches 40 zu erreichen, kann vorgesehen werden, oberhalb der obersten Ebene von Fettwannen 13' im Bereich deren Abstände Leitbleche 55 anzuordnen, um die aufsteigenden Brenngase auch in den Bereich oberhalb der Fettwannen 13' der obersten Ebene von Fettwannen zu leiten.

Je nach Füllvolumen der einzelnen Fettwannen 13, 13' und des Füllstoffes, insbesondere bei Wasser, kommt es immer wieder zu einem Kochen des Wassers in den Fettwannen 13, 13'. Einerseits wird dabei die für die Aufbringung des in dem Wasser der Fettwannen eingebrachten Flüssigwürze zum Grillgut hin gefördert. Andererseits leert sich dadurch die Füllung der Fettwannen 13, 13' zu schnell.

Aus diesem Grund ist unterhalb jeder der Fettwannen 13, 13' eine Abschirmplatte 52 angeordnet, die wenigstens die Größe des Bodens jeder der Fettwannen aufweist. Bei konisch sich nach oben verbreiternden Querschnitten von Fettwannen besitzt die Abschirmplatte 52 vorzugsweise die Breite der Öffnung der Fettwannen 13, 13'. Um eine Wärmeleitung von der Abschirmplatte 52 zu der Fettwanne 13, 13' möglichst zu minimieren, andererseits das Handling der Fettwannen 13, 13' nicht zu verkomplizieren, ist die Abschirmplatte 52 jeweils über einen senkrechten Blechsteg oder senkrechte Verbindungsstifte mit der ihr zugeordneten Fettwanne 13, 13' verbunden.

Die Fettwannen 13, 13' sind herausnehmbar in dem wannenartigen Einsatz 56 angeordnet, dessen Boden über der Brennstoffwanne 11 endet, welche als Verbrennungsrost ausgebildet sein kann. Der Einsatz 56 wird vorzugsweise in den ebenfalls wannenförmigen Basisteil des Grillgerätes eingehängt. Unterhalb der Ebene des Verbrennungsrostes und damit unterhalb des Einsatzes 11' vorzugsweise an den Stirnseiten sind ganz oder teilweise verschließbare, insbesondere stufenlos verschließbare, Lüftungsöffnungen 17' angeordnet.

## Patentansprüche

1. Grillgerät mit
- einem Grillbereich (40),
- einem Bereich zur Verbrennung des Brennstoffes, insbesondere wenigstens einer Brennstoffwanne (11),
- wenigstens einer Fettwanne (13) unterhalb des Grillbereiches (40) zum Auffangen des vom Grillgut herabtropfenden Fettes,
**dadurch gekennzeichnet, daß**
die Fettwanne(n) (13) mit einem Stoff gefüllt ist, welcher das Fett aufnimmt und eine zu starke Erhitzung des Fettes verhindert, insbesondere Sand oder Wasser.

2. Grillgerät nach Anspruch 1,
**dadurch gekennzeichnet, daß**
oberhalb eines Basisteiles eine Haube (1) angeordnet ist,
- ein Grillbereich (40) im bzw. oberhalb des nach oben offenen Auslaßbereiches (32) der Haube (1) angeordnet ist,
- ein Bereich zur Verbrennung des Brennstoffes, insbesondere wenigstens eine Brennstoffwanne (11), so im Basisteil angeordnet ist, daß sie sich außerhalb der Grundfläche des Grillbereiches (40) der Haube (1) befindet,
- eine Fettwanne (13) zum Auffangen des vom Grillgut abtropfenden Fettes unterhalb der Grillfläche des Grillrostes angeordnet ist, welche wenigstens die Grundfläche des Grillrostes (9) besitzt und
- die Fettwanne (13) mit Wasser, Sand oder einem anderen zum Auffangen des Fettes geeigneten Substanz gefüllt ist.

3. Grillgerät nach einem der vorhergehenden Ansprüche,
**dadurch gekennzeichnet, daß**
das Basisteil aus einem Unterteil (14) besteht, in dessen oben offene Stirnseite entlang der beiden Außenseiten die Brennstoffwannen (2) einsetzbar sind.

4. Grillgerät nach einem der vorhergehenden Ansprüche,
**dadurch gekennzeichnet, daß**
der Boden des Unterteiles (14) als entfernbare Aschenwanne (33) ausgebildet ist.

5. Grillgerät nach einem der vorhergehenden Ansprüche,
**dadurch gekennzeichnet, daß**
das Unterteil (14) wenigstens in der Mitte einen Schrägbereich (20) aufweist, bei dem sich der innere freie Querschnitt des Unterteiles von oben nach unten vermindert, um die herabfallende Asche in den mittleren Bereich und damit die Aschenwanne zu transportieren.

6. Grillgerät nach einem der vorhergehenden Ansprüche,
**dadurch gekennzeichnet, daß**
die Brennstoffwannen (11) unterhalb der Konusteile (5) angeordnet sind und im Inneren der Haube (1) am Übergang zwischen Konusteil (5) und oberem Kaminteil (3) jeweils ein Vorsprung (4) weiter nach unten ragt, um die von der Brennstoffwanne (11) aufsteigenden heißen Gase turbulent nach unten innen umzulenken.

7. Grillgerät nach einem der vorhergehenden Ansprüche,
**dadurch gekennzeichnet, daß**
im Grillgerät Gasaustrittsdrüsen und/oder elektrische Heizstäbe vorhanden sind und an dessen Außenseite Anschlüsse für Gas- und/oder elektrischen Strom angeordnet sind.

8. Grillgerät nach einem der vorhergehenden Ansprüche,
**dadurch gekennzeichnet, daß**
die Brennstoffwannen (11) auf gleicher Höhe oder unterhalb der Höhe der Fettwanne (13) angeordnet ist.

9. Grillgerät nach einem der vorhergehenden Ansprüche,
**dadurch gekennzeichnet, daß**
der Konusteil (5) so flach ansteigend oder gar als horizontaler Absatz ausgebildet ist, daß dort Speisen warmgehalten oder gegart werden können.

10. Grillgerät nach einem der vorhergehenden Ansprüche,
**dadurch gekennzeichnet, daß**
der Vorsprung (4) sich vom außenliegenden Beginn des Konusbereiches aus nach unten innen erstreckt, so daß die Fläche des Konusteiles (5) von unten durch das Blech des Vorsprunges (4) abgeschirmt ist.

11. Grillgerät nach einem der vorhergehenden Ansprüche,
**dadurch gekennzeichnet, daß**
die Haube (1) zerlegbar ist.

12. Grillgerät nach einem der vorhergehenden Ansprüche,
**dadurch gekennzeichnet, daß**
die Haube (1) aus lösbar miteinander verbundenen Stirnflächen einerseits sowie die Längswände bildenden Teilen andererseits besteht und die Längsseite des Kaminteiles (3) sowie die im wesentlichen senkrecht verlaufende Wand (4a) des Vorsprunges (4) miteinander als einstückiges Blechteil ausgebildet sind, welches gelenkig mit dem wiederum einstückigen, anderen Schenkel des Vorsprunges (4b) ausgebildet ist, welches entlang seiner Längskante wiederum mit der Seitenwand (51) der Haube (1) gelenkig verbunden ist, wobei die drei Teile so im Winkel zueinander angeordnet werden können, daß zwischen dem äußeren Bereich des Bleches (4b) und dem senkrechten Blech des Kaminteiles (3') ein Konusblech (5') formschlüssig, insbesondere verrastbar, als Konurteil (5) einsetzbar ist, und dadurch die anderen Teile in ihrer Relativlage zueinander hält.

13. Grillgerät nach Anspruch 1,
**dadurch gekennzeichnet, daß**
unterhalb des Grillbereiches (40) in wenigstens zwei Ebenen Fettwannen (13, 13') so angeordnet sind, daß
- innerhalb der einzelnen Ebenen die Fettwannen (13, 13') im Abstand zueinander angeordnet sind,
- die Abstände einer Ebene von Fettwannen (13) durch die Fettwannen (13') der darüberliegenden Ebene - in der Aufsicht betrachtet - wenigstens verschlossen sind und
- sich die Fettwannen (13, 13') der verschiedenen Ebenen in der Summe und in der Aufsicht betrachtet wenigstens den gesamten Grillbereich (40) abdecken.

14. Grillgerät nach Anspruch 13,
**dadurch gekennzeichnet, daß**
im Abstand unterhalb des Bodens der Fettwanne ein Abschirmblech (52) wenigstens in der Größe des Bodens der Fettwanne (13) angeordnet ist.

15. Grillgerät nach einem der vorhergehenden Ansprüche,
**dadurch gekennzeichnet, daß**
die Fettwannen (13) in einem Einsatz (56) befestigt sind, der in das Basisteil oberhalb der Brennstoffwanne (11') einsetzbar, insbesondere von oben einhängbar, ist.
